Europäisches Patentamt

(19) European Patent Office

Office européen des brevets

(11) Numéro de publication : **0 021 877**
**B1**

# (12) FASCICULE DE BREVET EUROPÉEN

(45) Date de publication du fascicule du brevet :
01.09.82

(21) Numéro de dépôt : 80400719.3

(22) Date de dépôt : 22.05.80

(51) Int. Cl.³ : **B 60 K 41/08**

(54) Mécanisme de transmission comportant un embrayage et une boîte de vitesses à plusieurs rapports.

(30) Priorité : 08.06.79 FR 7914729

(43) Date de publication de la demande :
07.01.81 (Bulletin 81/01)

(45) Mention de la délivrance du brevet :
01.09.82 Bulletin 82/35

(84) Etats contractants désignés :
DE GB IT

(56) Documents cités :
DE - A - 2 217 482
FR - A - 2 154 235
FR - A - 2 417 689
GB - A - 2 012 892
US - A - 4 096 418

(73) Titulaire : AUTOMOBILES PEUGEOT
75, avenue de la Grande Armée
F-75116 Paris (FR)

SOCIETE ANONYME AUTOMOBILES CITROEN
117 à 167, Quai André Citroën
F-75747 Paris Cedex 15 (FR)

(72) Inventeur : Etienne, Michel
121, Grande Rue
F-95760 Valmondois (FR)

(74) Mandataire : Moncheny, Michel et al
c/o Cabinet Lavoix 2 Place d'Estienne d'Orves
F-75441 Paris Cedex 09 (FR)

EP 0 021 877 B1

Imprimerie Jouve, 18, rue St-Denis, 75001 Paris, France

# Mécanisme de transmission comportant un embrayage et une boîte de vitesses à plusieurs rapports

La présente invention est due à la collaboration de Monsieur Michel ETIENNE.

Elle concerne un perfectionnement aux mécanismes de transmission comportant un embrayage et une boîte de vitesses à plusieurs rapports, disposés entre un moteur et un organe récepteur. Elle s'applique notamment, mais non exclusivement, aux véhicules automobiles, qu'ils soient entraînés par un moteur thermique ou par un moteur électrique.

Sur un véhicule automobile, le moteur transmet le mouvement aux roues par l'intermédiaire d'une boîte de vitesses dont le rapport doit être adapté à la vitesse de déplacement du véhicule pour que le régime du moteur reste entre certaines limites. Si, après un changement de rapport, l'embrayage qui relie le moteur à la boîte de vitesses est accouplé alors qu'il existe une différence notable de vitesse entre ses éléments d'entrée et de sortie, il se produit un à-coup particulièrement désagréable pour les occupants du véhicule.

C'est pourquoi on a déjà proposé des dispositifs permettant de corriger la vitesse du moteur en fonction de l'écart de vitesse existant entre les éléments d'entrée et de sortie de l'embrayage, avant son accouplement, pour qu'au moment de l'accouplement cet écart soit aussi faible que possible.

Or, la mesure de la vitesse de l'élément de sortie de l'embrayage ne peut se faire que lorsque le rapport choisi sur la boîte est complètement engagé, ce qui ne laisse pas suffisamment de temps pour apporter au régime du moteur la correction nécessaire.

On connaît également un mécanisme de transmission décrit dans le brevet FR-A-2 154 235 comportant un embrayage et une boîte de vitesses à plusieurs rapports, disposés entre un moteur et un organe récepteur, des moyens pour agir sur la vitesse du moteur afin d'amener sensiblement à la même vitesse les éléments d'entrée et de sortie d'un des embrayages faisant partie de la boîte de vitesses, avant l'accouplement de ce dernier, un détecteur de vitesse du moteur et un détecteur de vitesse du récepteur et comportant en outre un calculateur électrique de la vitesse théorique de l'un de ces organes en fonction de la vitesse de l'autre organe et du rapport engagé de la boîte de vitesses et un comparateur de la vitesse calculée à la vitesse mesurée, la sortie du comparateur étant connectée aux moyens d'action sur la vitesse du moteur.

Le calculateur électrique utilisé dans ce dispositif est du type analogique.

Sa structure est cependant compliquée, rendant sa mise au point délicate à cause principalement du réglage des constantes de temps de ses circuits multivibrateurs et qui est indispensable, pour obtenir une bonne concordance des éléments d'entrée et de sortie d'un des embrayages faisant partie de la boîte de vitesses.

L'invention se propose d'obtenir une bonne concordance des vitesses des éléments d'entrée et de sortie de l'embrayage, à partir de la mesure de la vitesse de rotation des roues du véhicule grâce à un calculateur numérique particulièrement simple qui donne une bonne approximation de la vitesse à laquelle doivent tourner les roues pour une vitesse donnée du moteur et selon le rapport de la boîte que l'on se prépare à engager.

De cette façon, la correction de la vitesse du moteur peut commencer avant que le rapport soit complètement engagé si bien que le moteur atteint plus tôt la bonne vitesse.

L'invention a donc pour objet un mécanisme de transmission comportant un embrayage et une boîte de vitesses à plusieurs rapports, disposés entre un moteur et un organe récepteur, des moyens pour agir sur la vitesse du moteur afin d'amener sensiblement à la même vitesse les éléments d'entrée et de sortie de l'embrayage avant l'accouplement de ce dernier, un détecteur de vitesse du moteur et un détecteur de vitesse du récepteur, un calculateur de la vitesse théorique de l'un de ces organes en fonction de la vitesse de l'autre organe et du rapport engagé de la boîte de vitesses et un comparateur de la vitesse calculée à la vitesse mesurée, la sortie du comparateur étant connectée aux moyens d'action sur la vitesse du moteur, caractérisé en ce que le calculateur est numérique et est constitué par un ensemble de mémoires binaires relié à des multiplexeurs sélectionnant en fonction du rapport engagé de la boîte de vitesses des coefficients prédéterminés, entrés dans lesdites mémoires, les sorties des multiplexeurs étant connectées à au moins deux multiplieurs binaires montés en cascade, destinés à multiplier le signal correspondant à la vitesse du moteur par des coefficients de calcul de ladite vitesse théorique de rotation du récepteur en fonction du rapport engagé.

D'autres caractéristiques de l'invention apparaîtront au cours de la description qui va suivre, faite en référence aux dessins annexés, donnés uniquement à titre d'exemple et sur lesquels :

la Figure 1 est une vue schématique du mécanisme de transmission suivant l'invention ;

la Figure 2 est une vue plus détaillée de la partie électronique du mécanisme de la Figure 1.

Dans le présent exemple :

— le mécanisme de transmission est destiné à un véhicule automobile,

— le moteur est électrique,

— la boîte de vitesses est commandée manuellement et comporte 4 rapports,

— le désaccouplement de l'embrayage est réalisé automatiquement à partir du levier de vitesse (par exemple à partir d'un contact électrique placé sur le levier),

— l'accouplement de l'embrayage est réalisé automatiquement à partir d'un détecteur d'écart minimum $f_{RM} - f_R$.

Cependant, l'invention s'applique également dans les cas suivants :

— à tout mécanisme de transmission, en dehors de l'automobile,

— avec un moteur thermique ou autre,

— avec une commande manuelle de l'embrayage,

— avec une boîte de vitesses automatique,

— avec un nombre de rapports de transmission inférieur ou supérieur à 4.

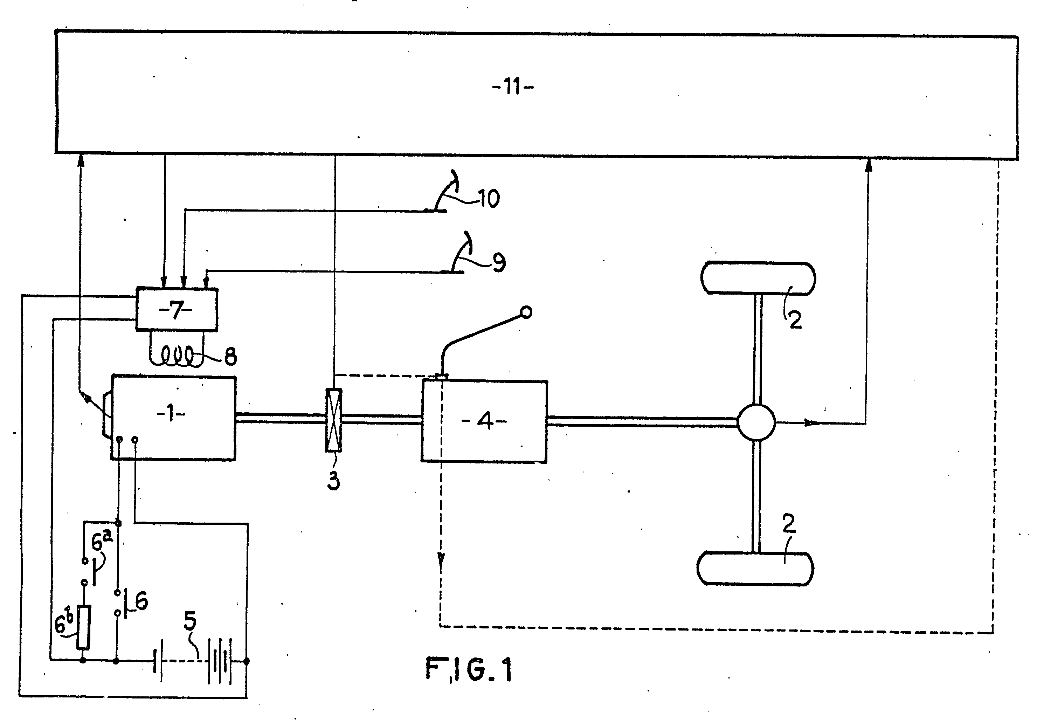

Le mécanisme de transmission représenté à la Figure 1 comprend un moteur électrique 1 destiné à entraîner les roues motrices 2 d'un véhicule par l'intermédiaire d'un embrayage 3 et d'une boîte de vitesses 4 qui, dans le présent exemple, est une boîte manuelle à quatre rapports. Le moteur électrique 1 est alimenté par une batterie 5 par l'intermédiaire d'un interrupteur 6 ou d'un interrupteur 6a et d'une résistance 6b connectés en série. La batterie 5 alimente en outre un circuit 7 de commande de l'enroulement d'excitation 8 du moteur 1.

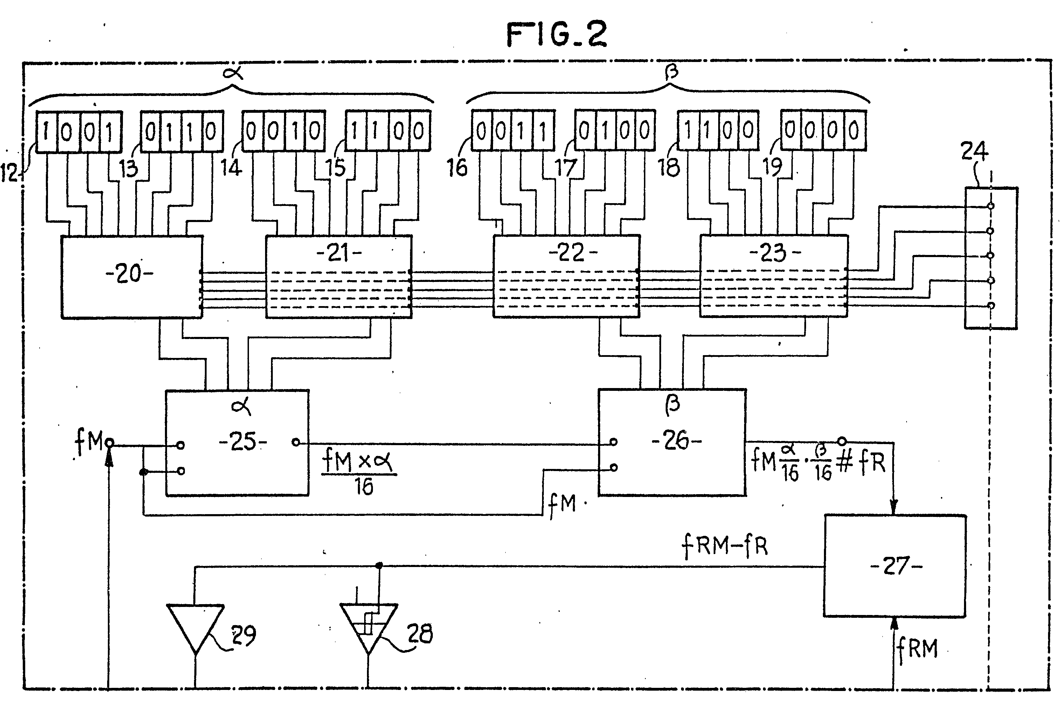

Le circuit 7 est commandé à son tour par la pédale d'accélérateur 9 et la pédale de frein 10 et par un circuit de calcul 11 représenté plus en détail à la Figure 2.

Le circuit 11 est en outre connecté au moteur 1 et à l'arbre d'entraînement des roues motrices et il est commandé par le levier de la boîte de vitesses 4 de façon couplée avec l'embrayage 3.

Ainsi qu'on peut le voir à la Figure 2, le circuit 11 comporte des groupes de mémoires 12 à 15 et 16 à 19 pour quatre rapports de vitesses.

Les mémoires 12 à 15 sont connectées deux par deux à des multiplexeurs 20 et 21 tandis que les mémoires 16 à 19 sont connectées deux par deux à des multiplexeurs 22 et 23.

Les multiplexeurs 20 à 23 sont tous commandés par un sélecteur 24 lié à la boîte de vitesses 4.

Les multiplexeurs 20 et 21 sont connectés à un premier multiplieur binaire 25 par le nombre $\alpha/16$ tandis que les multiplexeurs 22 et 23 sont connectés à un second multiplieur binaire 26 par le nombre $\beta/16$.

Le multiplieur binaire 25 reçoit sur une entrée un signal de fréquence $f_M$ provenant du moteur 1 et par une autre entrée ainsi que par sa sortie, il est connecté au multiplieur binaire 26. La sortie de ce dernier est connectée à un comparateur 27 qui reçoit par ailleurs un signal de fréquence $f_{RM}$ correspondant à la vitesse des roues motrices 2.

La sortie du comparateur 27 est connectée d'une part à un détecteur d'écart minimum 28 dont la sortie est reliée à l'embrayage 3 et d'autre part à un amplificateur 29 connecté à une entrée du circuit de commande 7 de l'excitation du moteur 1.

Le fonctionnement du mécanisme qui vient d'être décrit est le suivant.

Le moteur électrique 1 alimenté par la batterie 5 tourne à une vitesse déterminée et entraîne les roues motrices à une vitesse déterminée et entraîne les roues motrices 2 par l'intermédiaire de l'embrayage 3 et de la boîte de vitesses 4.

La vitesse du moteur 1 est appliquée sous la forme d'un signal de fréquence $f_M$ à l'entrée du multiplieur 25, tandis que la vitesse des roues motrices 2 est appliquée sous la forme d'un signal de fréquence $f_{RM}$ à une entrée du comparateur 27.

Le montage en cascade des deux multiplieurs 25 et 26 permet à leur sortie de disposer d'un nombre égal à $\alpha \times \beta/256$ fois le nombre d'impulsions d'entrée, $\alpha$ et $\beta$ étant des coefficients codés en binaire de 0 à 4 bits, ce qui correspond en décimal à des valeurs de $\alpha$ et $\beta$ comprises entre 0 et 15

$$0 \leq \alpha, \beta \leq 15.$$

Ce choix des coefficients $\alpha$ et $\beta$ donne une grille de 92 possibilités pour le produit $\alpha \times \beta/256$, compris entre 0 et 0,878 9.

La fréquence du signal $f_M$ est proportionnelle à la vitesse de rotation du moteur 1.

Cette fréquence est multipliée dans le multiplieur 25 par le nombre $\alpha/16$, $\alpha$ étant élaboré à partir des mémoires 12 à 15 par les multiplexeurs 20 et 21, compte tenu du rapport sélectionné de la boîte de vitesses 4 et transmis par le circuit 24.

Le signal de sortie du multiplieur 25 est donc égal 25 à $f_M \times \alpha/16$.

Il est appliqué au multiplieur 26 auquel est également appliqué le coefficient $\beta$ stocké dans les mémoires 16 à 19.

Le signal de sortie du multiplieur 26 est égal à :

$$\frac{f_M \times \alpha \times \beta}{16 \times 16} \# f_R$$

qui correspond à la vitesse des roues du véhicule avec le rapport sélectionné.

Le rapport $\alpha \times \beta/256$ choisi est le rapport le plus proche du rapport de transmission mécanique construit de sorte qu'on obtient une fréquence calculée $f_R$ proche de la vitesse proportionnelle à la vitesse réelle de rotation des roues 2 du véhicule.

La précision obtenue est de quelques pourcents.

Le signal $f_M \times \alpha \times \beta/256$ est comparé au signal $f_{RM}$ dans le comparateur 27 dont le signal de sortie est égal à la différence $f_{RM} - f_R$.

Ce signal est appliqué d'une part au détecteur d'écart minimum 28 qui ne commande la venue en contact des éléments menant et mené de l'embrayage 3 que si cet écart est au plus égal à une valeur prédéterminée et d'autre part, au circuit 7 de commande d'excitation du moteur électrique 2 afin de provoquer la modification de la vitesse de rotation dudit moteur en vue de réduire l'écart entre la vitesse $f_{RM}$ détectée et la vitesse $f_R$ calculée des roues du véhicule, de manière que l'embrayage puisse avoir lieu sans à-coups.

A titre d'exemple, avec les valeurs portées sur la Figure 2 pour les mémoires binaires, les coefficients $\lambda$, $\beta$ et le rapport $\lambda\beta/256$ sont les suivants :

| | α | β | αβ/256 |
|---|---|---|---|
| 1re vitesse | 9 | 2 | 0,070 3 |
| 2e vitesse | 5 | 6 | 0,117 18 |
| 3e vitesse | 6 | 8 | 0,187 5 |
| 4e vitesse | 8 | 8 | 0,25 |

Le cas échéant, il serait possible d'augmenter la précision (diminution de l'écart entre le rapport de transmission et le rapport le plus proche que peut donner le calculateur) en utilisant un troisième coefficient $\gamma$, comparable aux coefficients $\alpha$ et $\beta$, ainsi qu'un troisième multiplieur binaire en cascade avec les deux précédents.

Dans l'exemple décrit ci-dessus, la vitesse du moteur est corrigée à partir du signal de sortie du comparateur 27 dont les entrées reçoivent des signaux représentatifs de la vitesse réelle des roues et de leur vitesse théorique calculée, par le calculateur 12 à 26, à partir de la vitesse du moteur et du rapport engagé de la boîte de vitesses.

On pourrait de la même façon corriger la vitesse du moteur à partir du signal de sortie d'un comparateur dont les entrées recevraient des signaux représentatifs de la vitesse réelle du moteur et de sa vitesse théorique calculée à partir de la vitesse des roues et du rapport engagé de la boîte de vitesses.

## Revendications

1. Mécanisme de transmission comportant un embrayage (3) et une boîte de vitesses (4) à plusieurs rapports, disposés entre un moteur (1) et un organe récepteur (2), des moyens (7, 29) pour agir sur la vitesse du moteur afin d'amener sensiblement à la même vitesse les éléments d'entrée et de sortie de l'embrayage avant l'accouplement de ce dernier, un détecteur de vitesse du moteur et un détecteur de vitesse du récepteur, un calculateur (12 à 26) de la vitesse théorique de l'un de ces organes en fonction de la vitesse de l'autre organe et du rapport engagé de la boîte de vitesses (4) et un comparateur (27) de la vitesse calculée à la vitesse mesurée, la sortie du comparateur (27), étant connectée aux moyens (7, 29) d'action sur la vitesse du moteur, caractérisé en ce que le calculateur est numérique et est constitué par un ensemble de mémoires binaires (12 à 19) relié à des multiplexeurs (20 à 23) sélectionnant en fonction du rapport engagé de la boîte de vitesses (4) des coefficients ($\alpha$, $\beta$) prédéterminés, entrés dans lesdites mémoires (12 à 19), les sorties des multiplexeurs étant connectées à au moins deux multipleurs binaires (25 et 26) montés en cascade, destinés à multiplier le signal ($f_M$) correspondant à la vitesse du moteur par des coefficients de calcul de ladite vitesse théorique ($f_R$) de rotation du récepteur en fonction du rapport engagé.

2. Mécanisme suivant la revendication 1, caractérisé en ce que le détecteur de vitesse du moteur (1) est raccordé à une entrée du calculateur numérique (12 à 26) dont la sortie est connectée au comparateur (27) dont une autre entrée est connectée au détecteur de vitesse des roues constituant l'organe récepteur (2).

3. Mécanisme suivant la revendication 1, caractérisé en ce que le détecteur de vitesse des roues (2) est raccordé à une entrée du calculateur numérique (12 à 26) dont la sortie est connectée au comparateur (27) dont une autre entrée est connectée au détecteur de vitesse du moteur (1).

## Claims

1. A transmission mechanism comprising a clutch (3) and a gear box (4) having a plurality of speed ratios, disposed between a motor (1) and receiving means (2), means (7, 29) for acting on the speed of the motor so as to bring the input element and output element of the clutch to substantially the same speed before engagement of the clutch, a detector of the speed of the motor and a detector of the speed of the receiving means, a calculator (12 to 26) of the theoretical speed of one of these components as a function of the speed of the other component and of the engaged speed ratio of the gear box (4), and a comparator (27) of the calculated speed and the measured speed, the output of the comparator (27) being connected to the means (7, 29) for acting on the speed of the motor, characterized in that the calculator is a numeric calculator and is constituted by an assembly of binary memories (12 to 19) connected to multiplexers (20 to 23) selecting, as a function of the engaged speed ratio of the gear box (4), predetermined coefficients ($\alpha$, $\beta$) which are fed into said memories (12 to 19), the outputs of the multiplexers being connected to at least two binary multipliers (25, 26) which are connected in cascade and adapted to multiply the signal ($f_M$) corresponding to the speed of the motor by coefficients of calculation of said theoretical speed ($f_R$) of rotation of the receiving means as a function of the engaged speed ratio.

2. A mechanism as claimed in claim 1, characterized in that the detector of the speed of the motor (1) is connected to an input of the numeric calculator (12 to 26) whose output is connected to the comparator (27), an other input of which is connected to the detector of the speed of the wheels constituting the receiving means (2).

3. A mechanism as claimed in claim 1, characterized in that the detector of the speed of the wheels constituting the receiving means (2) is connected to an input of the numeric calculator (12 to 26) whose output is connected to the comparator (27) and whose other input is connected to the detector of the speed of the motor (1).

## Ansprüche

1. Übertragungsmechanismus mit einer Kupplung (3) und einem mehrere Gänge aufweisenden Schaltgetriebe (4), die zwischen einem Motor (1) und einem Aufnahmeorgan (2) angeordnet sind, mit einer Einrichtung (7, 29) zur Einwirkung auf die Motordrehzahl, um die Eingangs- und Ausgangselemente der Kupplung vor deren Einkuppeln etwa auf dieselbe Drehzahl zu bringen, mit einem Drehzahlgeber des Motors und einem Drehzahlgeber des Aufnehmers, mit einem Rechner (12 bis 26) zur Berechnung der theoretischen Drehzahl des einen dieser Organe in Abhängigkeit von der Drehzahl des anderen Organs, und mit einem Komparator (27) zum Vergleichen der berechneten Drehzahl mit der gemessenen Drehzahl, wobei der Ausgang des Komparators (27) mit Einrichtungen (7, 29) zum Einwirken auf die Motordrehzahl verbunden ist, dadurch gekennzeichnet, dass der Rechner numerisch ist und aus einer Anzahl von Binärspeichern (12 bis 19) besteht, die mit Multiplexern (20 bis 23) verbunden sind, die in Abhängigkeit vom eingelegten Gang des Getriebes (4) gegebene Koeffizienten ($\alpha$, $\beta$) wählen, die in die Speicher (12 bis 19) eingegeben werden, wobei die Ausgänge der Multiplexer mit wenigstens zwei in Kaskade geschalteten Multiplexern verbunden sind, die zum Multiplizieren des der Motordrehzahl entsprechenden Signals ($f_R$) mit Rechenkoeffizienten der theoretischen Drehzahl ($f_R$) des Aufnehmers in Abhängigkeit vom eingelegten Gang dienen.

2. Mechanismus nach Anspruch 1, dadurch gekennzeichnet, dass der Drehzahlgeber des Motors (1) mit einem Eingang des numerischen Rechners (12 bis 26) verbunden ist, dessen Ausgang mit dem Komparator (27) verbunden ist, von dem ein anderer Ausgang mit dem Drehzahlgeber der das Aufnahmeorgan bildenden Räder (2) verbunden ist.

3. Mechanismus nach Anspruch 1, dadurch gekennzeichnet, dass der Drehzahlgeber der das Aufnahmeorgan bildenden Räder (2) mit einem Eingang des numerischen Rechners (12 bis 26) vebunden ist, dessen Ausgang mit dem Komparator (27) verbunden ist, von dem ein anderer Ausgang mit dem Drehzahlgeber des Motors (1) verbunden ist.

F.IG.1

0 021 877

FIG. 2